Europäisches Patentamt

European Patent Office

Office européen des brevets

(19)

(11) Publication number: **0 085 053**

**B1**

(12) **EUROPEAN PATENT SPECIFICATION**

(45) Date of publication of patent specification: **02.10.85**

(21) Application number: **82900837.4**

(22) Date of filing: **16.03.82**

(86) International application number:
**PCT/SE82/00068**

(87) International publication number:
**WO 82/03185 30.09.82 Gazette 82/23**

(51) Int. Cl.⁴: **B 01 J 2/28, C 01 B 31/14,
C 09 C 1/58**

(54) **AGGLOMERATION METHOD AND AGGLOMERATES ACCORDING TO THE METHOD.**

(30) Priority: **16.03.81 SE 8101650**
**16.03.81 SE 8101649**
**23.03.81 SE 8101826**

(43) Date of publication of application:
**10.08.83 Bulletin 83/32**

(45) Publication of the grant of the patent:
**02.10.85 Bulletin 85/40**

(84) Designated Contracting States:
**DE GB SE**

(56) References cited:
**SE-B- 352 902**

(73) Proprietor: **SALA INTERNATIONAL
AKTIEBOLAG
Box 302
S-733 00 Sala (SE)**

(72) Inventor: **FALK, Thomas Sven Adolf
Gärdestagatan 8
S-733 00 Sala (SE)**

(74) Representative: **Björklund, Lennart Georg et al
Götalands Patentbyra AB Box 154
S-561 22 Huskvarna (SE)**

Courier Press, Leamington Spa, England.

## Description

The present invention relates to a method to produce agglomerates from fine-grained, particulate material, which at ambient temperature or slightly increased temperature and possibly a certain amount of drying has sufficiently strong bounds to get the following properties:

Low dust release
Good flowing characteristics
No clogging or adhesion to solid surfaces
In addition, the production costs for the agglomerates are low

In order to obtain this, the invention is primarily characterized in that the particle surfaces are coated with a liquid first water-insoluble binder, the particle surfaces having a natural or artificially produced greater affinity to the first binder than to possibly present other liquids, and after that are shaped to agglomerates in an agglomeration machine with at least one solid second binder, said second binder together with the first binder will make a binding phase between the particles, said second binder being added immediately before or within the agglomerating machine. The invention relates to a method in which the particulate material is shaped to agglomerates in the presence of water and the second binder is one or more oxides, which reacts with water to form insoluble hydroxides.

The first binder alone creates no or insignificant binding forces between the particles, and therefor it is possible to store the fine-grained particulate material after addition of the first binder. The second binder is added immediately before or in the agglomerating device. Suitably, the second binder together with the first binder should form a binding phase so slowly that the agglomerates will get time to be shaped before the binding phase obtains its full strength. In this way, the fine-grained particulate material can arrange itself in a densely packed arrangement. However, should the first and the second binder immediately form a firm binding phase, this would result in porous agglomerates. This time delay can be obtained by giving the solid particles a surface coating, which surface coating prevents or delays the binding reactions which may take place. Said surface coating on the second binder should have a greater affinity to the first binder than to present other liquids.

The fine-grained particulate material which may be subject to this agglomerating method is usually present together with water, for instance as a filter cake after a preceding wet treatment or as a moist powder. A pre-requisite for the performance of the agglomeration method according to the invention is then that the first binder is water-insoluble. Such binders may suitably be for instance mineral oil products, animal fats, vegetable fats or organic compounds produced from any of these products. These organic compounds as well as the animal or vegetable fats may suitably be summarized as mineral oil product-like substances. These mineral oil products and mineral oil product-like substances should not entirely consist of volatile substances, which will remain unchanged in the binder phase after the agglomeration process. In that case these volatile substances may evaporate and the final agglomerates will not retain their strength during storage.

Various solid second binders can be used depending upon the material characteristics of the liquid first binder. When using mineral oil products and mineral oil product-like substances as the first binder the oxides of the alkaline earth metals have been found to be especially favourable. In order to prevent the oxide or mixture of oxides in the second binder from premature reactions with water, they may be provided with a surface coating which prevents or delays the hydroxide forming reaction.

This surface coating furthermore should have a greater affinity to the first binder than to other liquids which may occur with the fine-grained particulate material. The oxide particles in the second binder will then get opportunity to combine with the first binder before any reaction takes place. Because that the surface coating on the second binder has great affinity to the first binder, the oxide particles in the second binder will completely or partly be surrounded by the first binder. When the surface coating on the oxide particle is dissolved in the first binder, the oxide surfaces will be free to react with water and the oxide is then transformed to hydroxide, such that the hydroxide crystals are surrounded by the first binder under creation of a binding phase with a solid structure. Since the hydroxide formation in this way takes place with a time delay it is possible to accomplish the agglomeration before the binding phase has got time to develop to such extent that it affects the movability of the mineral particles against each other, thus preventing the formation of a dense packing in the agglomerate.

It has been found when using binder combinations including a first binder consisting of mineral oil products or mineral oil product-like substances together with a second binder consisting of oxides with insoluble hydroxides, preferably oxides of the alcaline earth metals, the strongest bounds are achieved when the binders are present in about the same weight proportions, preferably with no greater disproportion than 1:3 in either direction. Depending upon the specific gravity of the first and the second binder and other reasons such as process technical or metallurgical reasons other weight proportions are conceivable. When other binder compositions comprising other types of solid and liquid binder components are used, other proportions between the binders included in the binding phase are possible. This is entirely depending upon what kind of bounds which are used to keep the agglomerates together.

The invention also includes agglomerates produced according to the method described above. The invention has been found especially suitable for agglomeration of pulverized coal. The first binder is then suitably a mineral oil product or a mineral oil product-like substance, and the second binder oxides of one or more of the alkaline earth metals, preferably quicklime. The pulverized coal is usually moist but may also be completely dry, in which case the necessary water for the reaction with the oxides is introduced immediately before and/or in the agglomeration machine. When the pulverized coal is present in the moist condition the mineral oil product or the mineral oil product-like substance is then introduced in a mixing device, and the first binder will then form a coating on the coal particles because of its greater affinity to coal in comparison to water.

The pulverized coal may occur either as a moist powder or as a water suspension. In the latter case all coal will be coated with the binder and no free binder will occur in the water because the mineral oil products and mineral oil product-like substances are water-insoluble. Excess water may then be separated from the binder-coated coal particles in customary way by means of a filter. Because the coal particles have got a hydrofobic coating consisting of the binder, an improved dewatering of the coal could be expected compared to what otherwise would be the case. The pulverized coal with its surface coating from the first binder may then be stored in storage bins at least for a shorter time period without any hazard that any major reactions will take place.

The pulverized coal coated with the first binder and the second binder, in this case preferably comprizing oxides of the alkaline earth metals, are then mixed immediately before or in the agglomeration machine such that the second binder is evenly distributed in the pulverized coal. The agglomeration machine may be any known agglomerating device, such as a bricketting machine, an extrusion machine, a balling drum, a balling disc, a pug mill or a micropelletizing drum. The use of agglomeration machines with a circulating load has the disadvantage that strong bounds may have been created in the recirculated undersized balls, hence causing weak bounds to the material which is deposited on the outside, and "shelling" will take place. It has been found especially feasible to use a pug (pin) mill or a micropelletizing drum such as described in the Swedish patent 390 382. The mixing of the second binder will then be accomplished by means of the pins or blades of the pug mill or the mixing blades in the micropelletizing drum, thus making a special mixing device for the binder unnecessary. Because the second binder, i.e. oxides of the alkaline earth metals, have a hydrofobic surface coating the binder particles will preferentially associate themselves with the oil-coated coal particle surfaces. The hydrofobic surface coating prevents the oxides from reacting with water before the oxides reach contact with the oil-coated coal surfaces. The oxides will completely or partly be surrounded by the oil, i.e. the first binder, whereupon the hydrofobic surface coating slowly is dissolved in the oil and the oxide surfaces will get opportunity to react with water. The hydroxide crystals formed will completely or partly be surrounded by the mineral oil product or the mineral oil product-like substance, thus creating a strong binding phase, which will bind the coal particles together. Since the oxide particles initially have a hydrofobic surface coating which prevents reactions with water, the full strength of the binding face will arise with a time delay. In this way the coal particles will be free to move relatively to each other such that they can rearrange themselves in a dense packing during the agglomeration process. The finished agglomerates will then soon reach their full strength. A further increase in strength can be achieved by a later drying treatment.

**Claims**

1. A method for producing agglomerates from fine-grained particulate material, characterized in that the particle surfaces are coated with a liquid first water-insoluble binder, the particle surfaces having a natural or artificially produced greater affinity to the first binder than to possibly present other liquids, and after that are shaped to agglomerates in presence of water in an agglomeration machine with at least one solid second binder, said second binder being one or more oxides, which reacts with water to form insoluble hydroxides and said second binder being added immediately before or within the agglomerating machine.

2. A method according to claim 1, characterized in that the first binder is a mineral oil product or a mineral oil product-like substance.

3. A method according to claim 1 or 2, characterized in that the oxide or oxides prior to the addition have been provided with a surface coating with greater affinity to the first binder than to other liquids present, said surface coating preventing or delaying the hydroxide forming reaction.

4. A method according to any of the preceding claims, characterized in that the second binder is mixed with the fine-grained particulate material immediately before or in the agglomeration machine, such that the second binder is evenly distributed in the material and such that the second binder in the binding phase formed in completely or partly surrounded by the first binder.

5. A method according to one or more of the preceding claims, characterized in that the second binder is mixed with the fine-grained particulate material immediately before or in the agglomeration machine, such that the second binder is evenly distributed in the material, in doing this the surface coating of the second binder is dissolved in the first binder, thus permitting the surface of the second binder to react with water and said second binder together with water forming insoluble hydroxides surrounded by the first binder.

6. A method according to any of the preceding claims, characterized in that the necessary water for the hydroxide formation originally is present in the fine grained particulate material.

7. A method according to any of the preceding claims, characterized in that the necessary water for hydroxide formation is added immediately before and/or in the agglomeration machine.

8. A method according to any of the preceding claims, characterized in that the first and second binders are added in approximately equal weight proportions.

9. Agglomerates of fine-grained particulate material made according to the method as described in one or more of the preceding claims, characterized in that the fine-grained particulate material is bonded together by a binding phase comprising a liquid first water-insoluble binder and one or more insoluble hydroxides, the particle surfaces having a natural or artificially produced greater affinity to the liquid first binder than to possibly present other liquids.

10. Agglomerates according to claim 9, characterized in that the fine-grained particulate material is coal, the first binder a mineral oil product or mineral oil product-like substance and the hydroxides are hydroxides of the alcaline earth metals, preferably slaked lime, at least partially surrounded by the first binder.

**Patentansprüche**

1. Verfahren zur Herstellung von Agglomeraten aus feinkörnigem, partikelförmigem Material, dadurch gekennzeichnet, dass die Partikeloberflächen mit einem flüssigen ersten und in Wasser unlösbaren Bindemittel überzogen werden, wobei die Partikeloberflächen eine natüliche oder auf künstlichem Wege hergestellte grössere Affinität zu dem ersten Bindemittel als zu vorkommenden anderen Flüssigkeiten besitzen, und anschliessend in Gegenwart von Wasser in einer Agglomeriermaschine mit wenigstens einem festen zweiten Bindemittel zu Agglomeraten geformt werden, welches zweite Bindemittel aus einem oder mehreren Oxiden besteht, welches mit Wasser reagiert, um unlösbare Hydroxide zu bilden, und welches zweite Bindemittel unmittelbar bevor oder in der Agglomeriermaschine zugefügt wird.

2. Verfahren nach Anspruch 1, dadurch gekennzeichnet, dass das erste Bindemittel ein Mineralölprodukt oder eine mineralölproduktähnliche Substanz ist.

3. Verfahren nach Anspruch 1 oder 2, dadurch gekennzeichnet, dass das Oxid oder die Oxide vor dem Zusetzen mit einem Oberflächenbelag mit gröserer Affinität zu dem ersten Bindemittel als zu anderen vorkommenden Flüssigkeiten versehen wurde, welcher Oberflächenbelag die hydroxidbildende Reaktion verhindert oder verzögert.

4. Verfahren nach einem der vorhergehenden Ansprüche, dadurch gekennzeichnet, dass das andere Bindemittel unmittelbar vor oder in der Agglomeriermaschine mit dem Feinkörnigen partikelförmigen Material gemischt wird derart, dass das zweite Bindemittel in dem Material gleichförmig verteilt wird, und dass das zweite Bindemittel in der gebildeten Bindephase ganz oder teilweise von dem ersten Bindemittel umgeben wird.

5. Verfahren nach einem oder mehreren der vorhergehenden Ansprüche, dadurch gekennzeichnet, dass das zweite Bindemittel unmittelbar bevor oder in der Agglomeriermaschine mit dem feinkörnigen partikelförmigen Material gemischt wird derart, dass das zweite Bindemittel im Material gleichförmig verteilt ist, wobei der Oberflächenbelag des zweiten Bindemittels in dem ersten Bindemittel gelöst wird, so dass die Oberfläche des zweiten Bindemittels mit Wasser reagieren kann und das genannte zweite Bindemittel suzammen mit Wasser unlösbare Hydroxide bildet, die von dem ersten Bindemittel umgeben sind.

6. Verfahren nach einem der vorhergehenden Ansprüche, dadurch gekennzeichnet, dass das für die Hydroxidbildung erforderliche Wasser ursprünglich in dem feinkörnigen partikelförmigen Material vorhanden ist.

7. Verfahren nach einem der vorhergehenden Ansprüche, dadurch gekennzeichnet, dass das für die Hydroxidbildung erforderliche Wasser unmittelbar vor und/oder in der Agglomeriermaschine zugefügt wird.

8. Verfahren nach einem der vorhergehenden Ansprüche, dadurch gekennzeichnet, dass das erste und das zweite Bindemittel in etwa gleichen Gewichtsproportionen zugefügt werden.

9. Agglomerate aus feinkörnigem partikelförmigem Material, welche gemäss dem Verfahren wie in einem oder mehreren der vorhergehenden Ansprüche beschrieben hergestellt sind, dadurch gekennzeichnet, dass das feinkörnige partikelförmige Material durch eine Bindephase zusammengehalten ist, welche ein flüssiges erstes und in Wasser unlösbares Bindemittel und ein oder mehrere unlösbare Hydroxide umfasst, wobei die Partikeloberflächen eine natürliche oder künstlich erzeugte grössere Affinität zu dem flüssigen ersten Bindemittel als zu eventuell vorkommenden anderen Flüssigkeiten besitzen.

10. Agglomerate nach Anspruch 9, dadurch gekennzeichnet, dass das feinkörnige partikelförmige Material Kohle ist, das erste Bindemittel ein Mineralölprodukt oder eine mineralölproduktähnliche Substanz und die Hydroxide Hydroxide aus alkalischen Erdmetallen sind, vorzugsweise gelöschter Kalk, welche wenigstens teilweise von dem ersten Bindemittel umgeben sind.

**Revendications**

1. Un procédé de fabrication d'agglomérat à partir d'un matériau particulaire à grains fins, caractérisé en ce que les surfaces de particules sont revêtues avec un premier liant liquide insoluble dans l'eau, les surfaces de particules ayant une affinité naturelle ou produite artificiellement plus élevée pour ce premier liant que pour d'autres liquides éventuellement présents, les particules étant ensuite formées en agglomérats en présence d'eau dans une machine à agglomérer avec au moins un second liant solide, ledit second liant étant un ou plusieurs oxydes qui réagissent avec l'eau pour donner des hydroxydes insolubles, ledit second liant étant ajouté immédiatement avant ou dans la machine à agglomérer.

2. Un procédé selon la revendication 1, caractérisé en ce que le premier liant est un produit huileux minéral ou une substance équivalant à un produit huileux minéral.

3. Un procédé selon la revendication 1 ou 2, caractérisé en ce que le ou les oxydes, avant addition, sont munis d'un revêtement superficiel à affinité plus élevée pour le premier liant que pour les autres liquides présents, ledit revêtement de surface évitant ou retardant la réaction de formation d'hydroxyde.

4. Un procédé selon l'une quelconque des revendications précédentes, caractérisé en ce que le second liant est mélangé avec le matériau particulaire à grains fins immédiatement avant ou dans la machine à agglomérer, de telle sorte que le second liant soit régulièrement réparti dans le matériau et que le second liant soit totalement ou partiellement entouré par le premier liant dans la phase liante formée.

5. Un procédé selon une ou plusieurs des revendications précédentes, caractérisé en ce que le second liant est mélangé avec le matériau particulaire à grains fins immédiatement avant ou dans la machine à agglomérer, de telle sorte que le second liant soit régulièrement réparti dans le matériau et que, ce faisant, le revêtement de surface du second liant soit dissous dans le premier liant, ce qui permet à la surface du second liant de réagir avec l'eau, ledit second liant ensemble avec l'eau formant des hydroxydes insolubles entourés par le premier liant.

6. Un procédé selon l'une quelconque des revendications précédentes, caractérisé en ce que l'eau nécessaire à la formation de l'hydroxyde est à l'origine présente dans le matériau particulaire à grains fins.

7. Un procédé selon l'une quelconque des revendications précédentes, caractérisé en ce que l'eau nécessaire à la formation de l'hydroxyde est ajouté immédiatement avant et/ou dans la machine à agglomérer.

8. Un procédé selon l'une quelconque des revendications précédentes, caractérisé en ce que le premier et le second liants sont ajoutés en proportions pondérales approximativement égales.

9. Des agglomérats et matériaux particulaires à grains fins fabriqués selon le procédé décrit dans une ou plusieurs des revendications précédentes, caractérisés en ce que le matériau particulaire à grains fins est lié ensemble avec une phase liante comprenant un premier liant liquide insoluble dans l'eau et un ou plusieurs hydroxydes insolubles, les surfaces particulaires ayant une affinité naturelle ou produite artificiellement plus élevée pour le premier liant liquide que pour d'autres liquides éventuellement présents.

10. Des agglomérats selon la revendication 9, caractérisés en ce que le matériau particulaire à grains fins est du charbon, le premier liant étant un produit huileux minéral ou une substance équivalant à un produit huileux minéral, et les hydroxydes sont des hydroxydes de métaux alcalino terreux, de préférence de la chaux éteinte, au moins partiellement entourés par le premier liant.